# EUROPEAN PATENT SPECIFICATION

(11) **EP 3 845 617 B1**
(45) Date of publication and mention of the grant of the patent: **05.10.2022**
(21) Application number: 19854117.9
(22) Date of filing: 22.08.2019
(51) Int. Cl.: C09D 133/04, C08F 20/10, C09D 5/16, C08F 220/28, C09D 133/14

(54) **ANTI-FOULING COATING MATERIAL COMPOSITION**
BEWUCHSHEMMENDE BESCHICHTUNGSMATERIALZUSAMMENSETZUNG
COMPOSITION DE MATÉRIAU DE REVÊTEMENT ANTISALISSURE

(30) Priority: 29.08.2018 JP 2018160863
(43) Date of publication of application: 07.07.2021
(60) Divisional application: 22184254.5
(73) Proprietor: Nitto Kasei Co., Ltd., Osaka-shi Osaka 533-0031 (JP)
(72) Inventor: KITAMURA, Hitoshi, Osaka-shi, Osaka 533-0031 (JP)
(74) Representative: Gulde & Partner
(86) International application number: PCT/JP2019/032761
(87) International publication number: WO 2020/045211

(56) References cited:
- JP-A- H04 252 209
- JP-A- H05 163 318
- JP-A- S51 140 932
- JP-A- 2003 119 420
- JP-A- 2005 520 912
- JP-B2- S6 361 989
- US-A1- 2014 213 517

## Description

### TECHNICAL FIELD

The present invention relates to an antifouling coating composition.

### BACKGROUND

Aquatic fouling organisms such as barnacles, tubeworms, common mussels, *Bugula neritina,* sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, a technique which forms an antifouling coating film by coating an antifouling coating composition on a ship and the like, and allows controlled release of an antifouling agent to realize an antifouling performance for a long period of time has been known (Patent Literatures 1 to 4).

### CITATION LIST

### PATENT LITERATURE

[Patent Literature 1] JP S63-61989 B
[Patent Literature 2] JP 2003-119420 A
[Patent Literature 3] JP 2003-119419 A
[Patent Literature 4] JP 2002-3776 A

### SUMMARY OF INVENTION

### TECHNICAL PROBLEM

The film dissolution properties of the antifouling coating film comprising polymer having (meth)acrylic acid alkoxy carbonyl methyl ester group disclosed in Patent Literatures 1 to 4 were extremely low, and thus it was difficult to exhibit antifouling property for a long period of time.

### SOLUTION TO PROBLEM

According to the present invention, according to claim 1, an antifouling coating composition comprising polymer A and antifouling agent; wherein the polymer A is a copolymer of monomer (a) and ethylenically unsaturated monomer (b) other than the monomer (a); and the monomer (a) is represented by general formula (1), is provided.

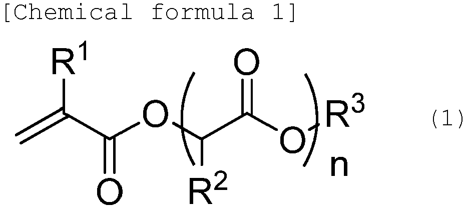

The present inventors have conducted intensive studies to solve the afore-mentioned problems, and have found that a composition containing polymer A and an antifouling agent can solve the afore-mentioned problem, thereby completing the present invention.

### MODE FOR CARRYING OUT THE INVENTION

Hereinafter, the present invention will be described in detail.

### 1. Antifouling Coating Composition

The antifouling coating composition according to the present invention contains polymer A and an antifouling agent.

### 1-1. Polymer A

Polymer A is a copolymer obtained from monomer (a) and ethylenically unsaturated monomer (b) other than the monomer (a). Polymer A contains monomer unit derived from monomers (a) and (b).

### <Monomer (a)>

Monomer (a) is represented by general formula (1). 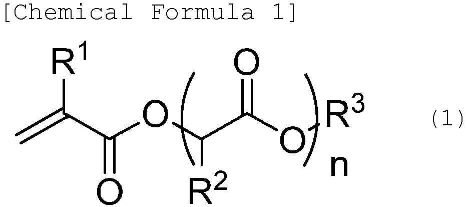 wherein, R¹ represents a hydrogen atom or methyl group; R² represents a hydrogen atom, methyl group, or phenyl group; R³ represents a methyl group, ethyl group, n-propyl group, isopropyl group, n-butyl group, t-butyl group, 2-ethylhexyl group, cyclohexyl group, benzyl group, phenyl group, 2-methoxyethyl group, 4-methoxybutyl group, vinyl group, or an allyl group; and n represents an integer of 2 to 10.

Preferably, R² is a hydrogen atom or methyl group.

Preferably, R³ is a methyl group, ethyl group, isopropyl group, or n-butyl group.

Here, n represents an integer of 2 to 10, and is preferably 2 to 6 in terms of long-term antifouling property.

As the monomer (a), for example, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, poly[α-(oxycarbonyl)benzyl] ethyl (meth)acrylate and the like can be mentioned. Preferably, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly[1-(oxypolycarbonylethyl)] methyl (meth)acrylate, poly[1-(oxypolycarbonylethyl)] ethyl (meth)acrylate and the like can be mentioned. These monomers (a) can be used alone, or two or more of these can be used in combination.

### <Monomer (b)>

Monomer (b) is an ethylenically unsaturated monomer other than the monomer (a), and (meth)acrylic acid ester, vinyl compound, aromatic compound, dialkyl ester compound of dibasic acid and the like can be mentioned for example. Here, in the present specification, (meth)acrylic acid ester refers to acrylic acid ester or methacrylic acid ester.

As the (meth)acrylic acid ester, for example, (meth)acrylic acid esters such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy]ethoxy]ethyl methacrylate, mono (2-(meth)acryloyloxyethyl) succinate, N-(3-dimethylaminopropyl) (meth)acrylamide, 2-hydroxyethyl (meth)acrylate, 2-[2-(2-methoxyethoxy)ethoxy]ethyl (meth)acrylate, N,N'-dimethyl (meth)acrylamide and the like; (meth)acrylic acid alkoxy carbonyl methyl esters such as methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate, α-(methoxycarbonyl)benzyl (meth)acrylate and α-(ethoxycarbonyl)benzyl (meth)acrylate; (meth)acrylic acid silyl esters such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl s-butylsilyl (meth)acrylate, diisopropylisopentylsilyl (meth)acrylate, isopropyl diisobutylsilyl (meth)acrylate, isopropyl di-s-butylsilyl (meth)acrylate, t-butyl diisobutylsilyl (meth)acrylate, t-butyl diisopentylsilyl (meth)acrylate, t-butyl diphenylsilyl (meth)acrylate, diisopropylthexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, tri-2-propylpentylsilyl (meth)acrylate, and the like; can be mentioned.

As the vinyl compound, for example, vinyl compounds having functional group such as vinyl chloride, vinylidene chloride, acrylonitrile, methacrylonitrile, vinyl acetate, vinyl benzoate, vinyl butyrate, butyl vinyl ether, lauryl vinyl ether, N-vinylpyrrolidone and the like can be mentioned.

As the aromatic compound, for example, styrene, vinyl toluene, α-methylstyrene and the like can be mentioned.

As the dialkyl ester compound of dibasic acid, dimethyl maleate, dibutyl maleate, dimethyl fumarate and the like can be mentioned.

In the present invention, these monomers (b) can be used alone or two or more of these can be used in combination. Particularly, as the monomer (b), (meth)acrylic acid ester is preferable in view of film dissolution property and film property; methyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, tetrahydrofurfuryl (meth)acrylate are particularly preferable in view of crack resistance; and triisopropylsilyl (meth)acrylate, t-butyldiphenylsilyl (meth)acrylate, tri-2-ethylhexylsilyl (meth)acrylate and the like are more preferable in view of film dissolution property.

Monomer (a) in polymer (A) is preferably 10 to 90 mass%, and more preferably 20 to 70 mass%.

Content of monomer (a) is, particularly for example, 10, 15, 20, 25, 30, 35, 40, 45, 50, 55, 60, 65, or 70 mass%, and can be in the range between the two values exemplified herein.

When the polymer (A) in the afore-mentioned range is used as the coating composition of the present invention, film dissolution property becomes particularly desirable.

Weight average molecular weight (Mw) of polymer A is preferably 5000 to 300000. When the molecular weight is less than 5000, coating film of the antifouling coating becomes weak, thereby becoming prone to delamination and cracks. When the molecular weight exceeds 300000, viscosity of the polymer solution rises, and thus handling becomes difficult. The Mw is, particularly for example, 5000, 10000, 20000, 30000, 40000, 50000, 60000, 70000, 80000, 90000, 100000, 200000, or 300000, and can be in the range between the two values exemplified herein.

As the method for measuring Mw, gel permeation chromatography (GPC method) can be mentioned for example.

Polymer A can be a random copolymer, an alternating copolymer, a periodic copolymer, or a block copolymer of monomer (a) and monomer (b).

The polymer A can be, for example, obtained by polymerizing monomer (a) and monomer (b) in the presence of a polymerization initiator.

As the polymerization initiator, for example, azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, 2,2'-azobis(N-butyl-2-methylpropionamide) and the like; and peroxides such as benzoyl peroxide, di-tert-butyl peroxide, tert-butyl peroxybenzoate, tert-butyl peroxyisopropylcarbonate, t-butyl peroxy-2-ethylhexanoate, t-hexyl peroxy-2-ethylhexanoate, di-t-hexylperoxide, t-butyl peroxy-2-ethylhexyl monocarbonate, di-t-butylperoxide, 1,1,3,3-tetramethylbutyl peroxyneodecanoate, 2-amyl peroxyneodecanoate, t-hexyl peroxypivalate, t-amyl peroxypivalate, 1,1,3,3-tetramethylbutyl peroxy-2-ethylhexanoate and the like can be mentioned. These polymerization initiators can be used alone, or two or more of these can be used in combination. As the polymerization initiator, 2,2'-azobisisobutyronitrile, 2,2'-azobis(2-methylbutyronitrile), 2,2'-azobis(2,4-dimethylvaleronitrile), dimethyl-2,2'-azobisisobutyrate, and 1,1,3,3-tetramethylbutyl peroxy-2-ethylhexanoate are particularly preferable. By suitably selecting the amount of the polymerization initiator being used, the molecular weight of copolymer A can be adjusted.

As the polymerization method, liquid polymerization, bulk polymerization, emulsion polymerization, suspension polymerization, non-aqueous dispersion polymerization and the like can be mentioned. Among these, liquid polymerization or non-aqueous dispersion polymerization is especially preferable since it can synthesize the polymer A simply with high accuracy.

In the polymerization reaction, organic solvent can be used as necessary. Here, organic solvent is not particularly limited. As the organic solvent, for example, aromatic hydrocarbon solvents such as xylene, toluene and the like; aliphatic hydrocarbon solvents; ester solvents such as ethyl acetate, butyl acetate, isobutyl acetate, methoxy propyl acetate, propylene glycol 1-monomethyl ether 2-acetate and the like; alcohol solvents such as isopropyl alcohol, butyl alcohol, propylene glycol monomethyl ether and the like; ether solvents such as dioxane, diethyl ether, dibutyl ether and the like; ketone solvents such as methyl ethyl ketone, methyl isobutyl ketone and the like; can be mentioned.

Among these, butyl acetate, isobutyl acetate, butyl alcohol, propylene glycol monomethyl ether, propylene glycol 1-monomethylether 2-acetate, toluene, xylene are preferable. These solvents can be used alone, or two or more of these can be used in combination.

The reaction temperature in the polymerization reaction shall be suitably controlled depending on the type of the polymerization initiator used and the like. The reaction temperature is usually 50 to 160°C, preferably 60 to 150°C.

The polymerization reaction is preferably performed under inert gas atmosphere such as nitrogen gas and argon gas.

### 1-2. Antifouling Agent

As the antifouling agent, an inorganic chemical and an organic chemical can be mentioned for example.

As the inorganic chemical for example, cuprous oxide, cuprous thiocyanate (generic name: copper rhodanide), copper powder and the like can be mentioned. Among these, cuprous oxide and copper rhodanide are preferable. Cuprous oxide is preferably surface-treated with glycerin, sucrose, stearic acid, lauric acid, lecithin, mineral oil and the like in terms of long-term shelf stability.

As the organic chemical for example, copper 2-mercaptopyridine-N-oxide (generic name: copper pyrithione), zinc 2-mercaptopyridine-N-oxide (generic name: zinc pyrithione), zinc ethylenebis(dithiocarbamate) (generic name: zineb), 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name: ECONEA 28), 4-[1-(2,3-dimethylphenyl)ethyl]-1H-imidazole (generic name: Medetomidine) and the like can be mentioned.

These antifouling agents can be used alone, or two or more of these can be used in combination.

### 1-3. Other Additives

Further, if necessary, the antifouling coating resin of the present invention can further include resin component other than polymer A, release modifier, plasticizer, pigment, dye, antifoaming agent, dehydrating agent, thixotropic agent, organic solvent and the like, thereby giving the antifouling coating.

As the other resin component, polymer P and the like can be mentioned for example.

Polymer P is a polymer which can be obtained by polymerizing monomer (b). Monomer (b) is an arbitrary ethylenically unsaturated monomer other than monomer (a). Monomer (b) used for polymerizing polymer P can have an identical composition or different composition from with the monomer (b) used for polymerizing polymer A.

In the present invention, one type of monomer (b) can be used alone or two or more types of monomer (b) can be used in combination. Particularly, in terms of compatibility with polymer A, methyl (meth)acrylate, ethyl (meth)acrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, furfuryl (meth)acrylate, tetrahydrofurfuryl (meth)acrylate, benzyl (meth)acrylate, triisopropylsilyl (meth)acrylate, t-butyl diphenylsilyl (meth)acrylate, tri-2-ethylhexylsilyl (meth)acrylate and the like are preferable.

As the polymerization method, initiator, solvent, temperature, other conditions, measurement method of Mw and the like, those mentioned for polymer A can be applied.

Content of polymer P in the composition of the present invention is not particularly limited. The content ratio with respect to polymer A is, by solids, usually 0.1 to 0.5, preferably 0.1 to 0.3 in terms of mass ratio (polymer P / polymer A).

As the release modifier for example, rosin, rosin derivative, naphthenic acid, cycloalkenyl carboxylic acid, bicycloalkenyl carboxylic acid, versatic acid, trimethyl isobutenyl cyclohexene carboxylic acid, and metal salts thereof; monocarboxylic acid and salts thereof; and the afore-mentioned alicyclic hydrocarbon resin can be mentioned. These release modifiers can be used alone, or two or more of these can be used in combination.

As the rosin derivative, hydrogenated rosin, disproportionated rosin, maleic acid modified rosin, formylated rosin, polymerized rosin and the like can be exemplified.

As the alicyclic hydrocarbon resin, for example, Quintone 1500, Quintone 1525L, Quintone 1700 (product name, available from Zeon Corporation) and the like can be mentioned as commercially available product.

Among these, rosin, rosin derivative, naphthenic acid, versatic acid, trimethyl isobutenyl cyclohexene carboxylic acid, and metal salts thereof are preferable.

As the plasticizer, phosphoric acid ester, phthalic acid ester, adipic acid ester, sebacic acid ester, polyester, epoxidized soybean oil, alkyl vinyl ether polymer, polyalkylene glycol, t-nonylpentasulfide, Vaseline, polybutene, tris(2-ethylhexyl)trimellitate, silicone oil, chlorinated paraffin and the like can be mentioned for example. These plasticizers can be used alone, or two or more of these can be used in combination.

As the dehydrating agent, calcium sulfate, synthetic zeolite-based adsorbent, orthoester, silicate such as tetramethoxysilane and tetraethoxysilane, isocyanate, carbodiimide, carbodimidazole and the like can be mentioned. These dehydrating agents can be used alone, or two or more of these can be used in combination.

### 2. Method for Manufacturing Antifouling Coating Composition

The antifouling coating composition of the present invention can be manufactured for example, by mixing and dispersing a solution mixture containing the polymer A, antifouling agent, other additives and the like by use of a disperser.

As the solution mixture, the one obtained by dissolving or dispersing various materials such as the polymer, antifouling agent and the like in a solvent is preferable.

As the disperser, for example, the one which can be used as a micro-pulverizer can be suitably used. For example, a commercially available homo mixer, sand mill, bead mill, disper and the like can be used. Furthermore, the solution mixture can be mixed and dispersed by using a stirrer-equipped container containing glass beads for mixing and dispersing.

### 3. Method of Antifouling Treatment, Antifouling Coating Film, and Coated Object

In the method of antifouling treatment according to the present invention, an antifouling coating film is formed by coating the above-explained antifouling coating composition on the surface of an object that is subjected to coating. The method of antifouling treatment according to the present invention can prevent adhesion of aquatic fouling organisms by the gradual dissolution of the surface of the antifouling coating film such that the surface of the coating film is continually renewed.

Examples of objects on which a coating film can be formed include ships (in particular, ship bottoms), fishing tools, and structures submerged in seawater.

The thickness of the antifouling coating film can be suitably selected depending on the type of an object on which the coating film is to be formed, the navigation speed of a ship, the seawater temperature and the like. For example, when the object on which a coating film is formed is a ship bottom, the thickness of the antifouling coating film is usually 50 to 700 µm, and preferably 100 to 600 µm.

### EXAMPLES

Examples and the like are provided hereinafter, and further clarifies characteristics of the present invention. The present invention, however, is not limited to these Examples.

In each of Production Examples, Examples, and Comparative Examples, "%" denotes "mass%". The weight-average molecular weight (Mw) was determined by gel permeation chromatography (GPC) (using a polystyrene standard). GPC was performed under the following conditions.
Equipment: HLC-8220 GPC (available from Tosoh Corporation)
Column: TSK-gel Super HZM-M, two columns used
Flow rate: 0.35 mL/min
Detector: RI
Column thermostat temperature: 40°C
Developing solvent: THF

The non-volatile content is a value determined in accordance with JIS K 5601-1-2:1999 (ISO 3251:1993) "Testing methods for paint components- Determination of non-volatile matter content".

### <production example 1 (production of monomer a-1)>

### (first reaction)

To a four-necked flask equipped with a thermometer, reflux condenser, and stirrer, 215 g (1.85 mol) of sodium monochloroacetate, 200 g (1.85 mol) of methyl chloroacetate, and 300 g of N-methyl-2-pyrrolidone were charged, and the mixture was agitated for 6 hours at 70 to 80°C. After completion of the reaction, 500 ml of toluene was charged to the reaction solution, and then the organic layer was washed with water, hydrochloric acid solution, and sodium bicarbonate in this order. Subsequently, the solvent was removed by condensation under reduced pressure, thereby obtaining 262 g of methoxycarbonylmethyl chloroacetate.

### (second reaction)

Subsequently, to a four-necked flask equipped with a thermometer, reflux condenser, stirrer, and dropping funnel, 200 g (1.20 mol) of methoxycarbonylmethyl chloroacetate as the product material of the first reaction, 87 g (1.20 mol) of acrylic acid, 0.1 g of 4-methoxyphenol, and 500 g of ethyl acetate were charged, and 122 g (1.20 mol) or triethylamine was added in a dropwise manner under agitation while keeping the temperature at or below 40°C. After titration, the reaction mixture was agitated for 6 hours at 70 to 80°C. After completion of the reaction, the organic layer was washed with water, hydrochloric acid solution, and sodium bicarbonate in this order. Subsequently, the solvent was removed by condensation under reduced pressure, thereby obtaining 230.7 g of monomer a-1.

### <production examples 2 to 24 (production of monomers a-2 to a-24)>

Raw materials shown in Table 1 were used, and the reaction was performed by procedures similar to those of production example 1, thereby obtaining monomers a-2 to a-24. Reaction conditions of production examples 2 to 24, and yield are shown in Table 1.

**[Table 1]**

| Table 1 | | | | | | First Reaction | | | | | | | | Second Reaction | | | | | | |
|---|---|---|---|---|---|---|---|---|---|---|---|---|---|---|---|---|---|---|---|---|
| | | | | | | Raw Material (g) | | | | | | | yield (g) | Raw Material (g) | | | | | | yield (g) |
| production example | monomer | R1 | R2 | R3 | n | CANa | CPANa | CAMe | CAEt | CAiPr | CAnBu | NMP | | product material of first reaction | AA | MAA | TEA | Ethyl Acetate | MEHQ | |
| 1 | a-1 | H | H | Me | 2 | 215 | | 200 | | | | 300 | 262 | 200 | 87 | | 122 | 500 | 0.1 | 230.7 |
| 2 | a-2 | H | H | Et | 2 | 199 | | | 210 | | | 300 | 269 | 200 | 80 | | 112 | 500 | 0.1 | 227.5 |
| 3 | a-3 | Me | H | Me | 2 | 215 | | 200 | | | | 300 | 262 | 200 | | 103 | 122 | 500 | 0.1 | 246.6 |
| 4 | a-4 | Me | H | Et | 2 | 199 | | | 210 | | | 300 | 269 | 200 | | 95 | 112 | 500 | 0.1 | 242.2 |
| 5 | a-5 | H | H | iPr | 2 | 188 | | | | 220 | | 300 | 276 | 200 | 74 | | 104 | 500 | 0.1 | 224.8 |
| 6 | a-6 | H | H | Bu | 2 | 178 | | | | | 230 | 300 | 284 | 200 | 69 | | 97 | 500 | 0.1 | 222.5 |
| 7 | a-7 | H | Me | Me | 2 | | 228 | 190 | | | | 300 | 253 | 200 | 80 | | 112 | 500 | 0.1 | 227.5 |
| 8 | a-8 | H | Me | Et | 2 | | 213 | | 200 | | | 300 | 254 | 200 | 74 | | 104 | 500 | 0.1 | 224.8 |
| 9 | a-9 | H | H | Me | 3 | 321 | | 150 | | | | 300 | 260 | 200 | 64 | | 90 | 500 | 0.1 | 220.1 |
| 10 | a-10 | H | H | Et | 3 | 305 | | | 160 | | | 300 | 266 | 200 | 60 | | 85 | 500 | 0.1 | 218.4 |
| 11 | a-11 | Me | H | Me | 3 | 321 | | 150 | | | | 300 | 260 | 200 | | 77 | 90 | 500 | 0.1 | 232.0 |
| 12 | a-12 | Me | H | Et | 3 | 305 | | | 160 | | | 300 | 266 | 200 | | 72 | 85 | 500 | 0.1 | 229.5 |
| 13 | a-13 | H | H | Me | 4 | 384 | | 120 | | | | 300 | 258 | 200 | 51 | | 72 | 500 | 0.1 | 214.0 |
| 14 | a-14 | H | H | Et | 4 | 370 | | | 130 | | | 300 | 264 | 200 | 49 | | 68 | 500 | 0.1 | 212.8 |
| 15 | a-15 | Me | H | Me | 4 | 384 | | 120 | | | | 300 | 258 | 200 | | 61 | 72 | 500 | 0.1 | 223.4 |
| 16 | a-16 | Me | H | Et | 4 | 370 | | | 130 | | | 300 | 264 | 200 | | 58 | 68 | 500 | 0.1 | 221.8 |
| 17 | a-17 | H | H | Me | 5 | 429 | | 100 | | | | 300 | 257 | 200 | 42 | | 59 | 500 | 0.1 | 209.9 |
| 18 | a-18 | H | H | Et | 5 | 419 | | | 110 | | | 300 | 266 | 200 | 41 | | 57 | 500 | 0.1 | 208.5 |
| 19 | a-19 | Me | H | Me | 5 | 429 | | 100 | | | | 300 | 257 | 200 | | 51 | 59 | 500 | 0.1 | 217.7 |
| 20 | a-20 | Me | H | Et | 5 | 419 | | | 110 | | | 300 | 265 | 200 | | 49 | 57 | 500 | 0.1 | 216.6 |
| 21 | a-21 | H | H | Me | 6 | 454 | | 85 | | | | 300 | 252 | 200 | 36 | | 51 | 500 | 0.1 | 207.0 |
| 22 | a-22 | H | H | Et | 6 | 427 | | | 90 | | | 300 | 249 | 200 | 35 | | 49 | 500 | 0.1 | 206.3 |
| 23 | a-23 | Me | H | Me | 6 | 454 | | 85 | | | | 300 | 252 | 200 | | 43 | 51 | 500 | 0.1 | 213.7 |
| 24 | a-24 | Me | H | Et | 6 | 427 | | | 90 | | | 300 | 248 | 200 | | 42 | 49 | 500 | 0.1 | 212.9 |

Details of the raw materials shown in Table 1 are as below.
AA: acrylic acid
MAA: methacrylic acid
NMP: N-methyl-2-pyrrolidone
CANa: sodium monochloroacetate
CPANa: sodium 2-chloropropionate
CAMe: methyl chloroacetate
CAEt: ethyl chloroacetate
CAiPr: isopropyl chloroacetate
CAnBu: n-butyl chloroacetate
MEHQ: 4-methoxyphenol
TEA: triethylamine

### <production example 25 (production of polymer solution A-1)>

To a four-necked flask equipped with a thermometer, reflux condenser, stirrer, and dropping funnel, 50 g of xylene and 50 g of propylene glycol monomethyl ether were charged as solvent, followed by introduction of nitrogen gas, and then the mixture was maintained at 88°C with agitation. To the solvent mixture, a mixture of 60 g of monomer (a-1) as monomer (a), 30 g of methyl methacrylate and 10 g of 2-methoxyethyl acrylate as monomer (b), 2.0 g (initial addition) of 1,1,3,3-tetramethylbutyl peroxy-2-ethylhexanoate as polymerization initiator was added in a dropwise manner over 3 hours while maintaining the reaction mixture at 88°C. Subsequently, after performing agitation for 1 hour at 88°C, 0.1 g of 1,1,3,3-tetramethylbutyl peroxy-2-ethylhexanoate was added every 1 hour for three times, followed by agitation for 2 hours at the same temperature. Then, the reaction mixture was cooled to room temperature to obtain the polymer solution A-1. Non-volatile content and Mw of A-1 are shown in Table 2.

### <production examples 26 to 56 (production of polymer solutions A-2 to A-26, B-1 to B-6)>

Except for the usage of the monomer and the solvent as shown in Table 2 to Table 4, the polymerization reaction was performed by procedures similar to those of production example 1, thereby obtaining polymer solutions A-2 to A-26 and B-1 to B-6. Non-volatile content and Mw of A-2 to A-26 and B-1 to B-6 are shown in Table 2 to Table 4. The numerical values in the Tables represent mass%.

**[Table 2]**

| Table 2 | | copolymer solution production example | | | | | | | | | | | | | | | |
|---|---|---|---|---|---|---|---|---|---|---|---|---|---|---|---|---|---|
| | | 25 | 26 | 27 | 28 | 29 | 30 | 31 | 32 | 33 | 34 | 35 | 36 | 37 | 38 | 39 | 40 |
| solvent | xylene | 50 | 80 | 50 | 80 | 100 | 100 | 100 | 100 | 100 | 100 | 100 | 100 | 50 | 50 | 50 | 80 |
| | 1-butanol | | 20 | | 20 | | | | | | | | | | | | 20 |
| | propyleneglycol monomethyl ether | 50 | | 50 | | | | | | | | | | 50 | 50 | 50 | |
| monomer (a) | monomer (a-1) | 60 | | | | 60 | | | | | | | | 60 | 50 | 40 | |
| | monomer (a-2) | | 60 | | | | 60 | | | | | | | | | | 60 |
| | monomer (a-3) | | | 60 | | | | 60 | | | | | | | | | |
| | monomer (a-4) | | | | 60 | | | | 60 | | | | | | | | |
| | monomer (a-5) | | | | | | | | | 60 | | | | | | | |
| | monomer (a-6) | | | | | | | | | | 60 | | | | | | |
| | monomer (a-7) | | | | | | | | | | | 60 | | | | | |
| | monomer (a-8) | | | | | | | | | | | | 60 | | | | |
| monomer (b) | methyl methacrylate | 30 | 30 | 30 | 30 | 40 | 40 | 40 | 40 | 30 | 30 | 30 | 30 | 30 | 40 | 40 | 30 |
| | 2-methoxyethyl acrylate | 10 | 10 | 10 | 10 | | | | | 10 | 10 | 10 | 10 | | 10 | 10 | |
| | n-butyl acrylate | | | | | | | | | | | | | 10 | | | 10 |
| | methoxvcarbonylmethyl acrylate | | | | | | | | | | | | | | | 10 | |
| | ethoxycarbonylmethyl acrylate | | | | | | | | | | | | | | | | |
| total of monomer solids | | 100 | 100 | 100 | 100 | 100 | 100 | 100 | 100 | 100 | 100 | 100 | 100 | 100 | 100 | 100 | 100 |
| polymer solution | name | A-1 | A-2 | A-3 | A-4 | A-5 | A-6 | A-7 | A-8 | A-9 | A-10 | A-11 | A-12 | A-13 | A-14 | A-15 | A-16 |
| | weight average molecular weight (Mw) | 28000 | 30200 | 30500 | 29400 | 29900 | 28900 | 29000 | 29700 | 30500 | 31000 | 28800 | 29900 | 31500 | 30800 | 28900 | 29400 |
| | non-volatile content (%, 125°C, 1 hour) | 51.2 | 50.9 | 51.5 | 51.0 | 51.3 | 51.1 | 51.6 | 50.8 | 51.6 | 51.4 | 51.2 | 51.3 | 51.0 | 50.9 | 50.8 | 51.2 |

**[Table 3]**

| Table 3 | | copolymer solution production example | | | | | | | |
|---|---|---|---|---|---|---|---|---|---|
| | | 41 | 42 | 43 | 44 | 45 | 46 | 47 | 48 |
| solvent | xylene | 90 | 90 | 50 | 50 | 100 | 100 | 50 | 80 |
| | 1-butanol | 10 | 10 | | | | | | 20 |
| | propyleneglycol monomethyl ether | | | 50 | 50 | | | 50 | |
| monomer (a) | monomer (a-1) | | | | | 30 | | 18 | |
| | monomer (a-2) | 50 | 40 | | | | 30 | | 20 |
| | monomer (a-3) | | | 60 | 50 | | | | |
| | monomer (a-9) | | | | | | | 8 | |
| | monomer (a-10) | | | | | | | | 10 |
| | monomer (a-13) | | | | | | | 3 | |
| | monomer (a-14) | | | | | | | | 5 |
| | monomer (a-17) | | | | | | | 2 | |
| | monomer (a-18) | | | | | | | | 2 |
| | monomer (a-21) | | | | | | | 1 | |
| | monomer (a-22) | | | | | | | | 1 |
| monomer (b) | methyl methacrylate | 40 | 40 | 30 | 40 | 40 | 30 | 30 | 30 |
| | 2-methoxyethyl acrylate | 10 | 10 | | 10 | | | 10 | 10 |
| | n-butyl acrylate | | | 10 | | | | | |
| | triisopropylsilyl acrylate | | | | | 30 | | | |
| | triisopropylsilyl methacrylate | | | | | | 30 | | |
| | methoxycarbonylmethyl acrylate | | | | | | | 28 | |
| | ethoxycarbonylmethyl acrylate | | 10 | | | | 10 | | 22 |
| total of monomer solids | | 100 | 100 | 100 | 100 | 100 | 100 | 100 | 100 |
| polymer solution | name | A-17 | A-18 | A-19 | A-20 | A-21 | A-22 | A-23 | A-24 |
| | weight average molecular weight (Mw) | 30600 | 27800 | 31800 | 32000 | 28400 | 32000 | 28500 | 31200 |
| | non-volatile content (%, 125°C, 1 hour) | 51.3 | 51.4 | 50.9 | 51.8 | 50.9 | 51.3 | 51.2 | 51.5 |

| Table 4 | | copolymer solution production example | | | | | | | |
|---|---|---|---|---|---|---|---|---|---|
| | | 49 | 50 | 51 | 52 | 53 | 54 | 55 | 56 |
| solvent | xylene | 50 | 80 | 50 | 80 | 50 | 80 | 80 | 80 |
| | 1-butanol | | 20 | | | | | | |
| | propyleneglycol monomethyl ether | 50 | | 50 | 20 | 50 | 20 | 20 | 20 |
| monomer (a) | monomer (a-3) | 19 | | | | | | | |
| | monomer (a-4) | | 20 | | | | | | |
| | monomer (a-11) | 7 | | | | | | | |
| | monomer (a-12) | | 10 | | | | | | |
| | monomer (a-15) | 3 | | | | | | | |
| | monomer (a-16) | | 5 | | | | | | |
| | monomer (a-19) | 2 | | | | | | | |
| | monomer (a-20) | | 2 | | | | | | |
| | monomer (a-23) | 1 | | | | | | | |
| | monomer (a-24) | | 1 | | | | | | |
| monomer (b) | methyl methacrylate | 30 | 30 | 30 | 30 | 30 | 30 | 30 | |
| | 2-methoxyethyl acrylate | 10 | 10 | 10 | 10 | 10 | 10 | 10 | 10 |
| | 2-methoxyethyl methacrylate | | | | | | | | 20 |
| | ethyl acrylate | | | | | | | | 60 |
| | zinc versatate acrylate | | | | | | | | 10 |
| | methoxycarbonylmethyl acrylate | | | 60 | | | | | |
| | ethoxycarbonylmethyl acrylate | | | | 60 | | | | |
| | methoxycarbonylmethyl methacrylate | 28 | | | | 60 | | | |
| | ethoxycarbonylmethyl methacrylate | | 22 | | | | 60 | | |
| | 1-(methoxycarbonyl)ethyl acrylate | | | | | | | 60 | |
| total of monomer solids | | 100 | 100 | 100 | 100 | 100 | 100 | 100 | 100 |
| polymer solution | name | A-25 | A-26 | B-1 | B-2 | B-3 | B-4 | B-5 | B-6 |
| | weight average molecular weight (Mw) | 29000 | 29600 | 31100 | 30400 | 31500 | 28800 | 29700 | 14900 |
| | non-volatile content (%. 125°C. 1 hour) | 50.8 | 51.3 | 51.4 | 51.6 | 50.9 | 51.4 | 51.1 | 50.1 |

### <production example 57 (production of gum rosin solution)>

To a flask equipped with a thermometer, reflux condenser and stirrer, 300 g of gum rosin available from China (WW) and 310 g of xylene were charged. The reaction mixture was dehydrated under reflux under reduced pressure for 1 hour at 70 to 80°C to give a xylene solution of gum rosin (brown transparent liquid, 50% solids). The non-volatile content of the solution obtained was 50.3%.

### <production example 58 (production of rosin zinc salt solution)>

To a flask equipped with a thermometer, reflux condenser, and stirrer, 240 g of gum rosin available from China (WW) and 360 g of xylene were charged, and 120 g of zinc oxide was added so that all of the resin acid in the rosin would form zinc salt. The reaction mixture was dehydrated under reflux under reduced pressure for 3 hours at 70 to 80°C. Then, the reaction mixture was cooled and filtered to give a xylene solution of rosin zinc salt (dark brown transparent liquid, 50% solids). The non-volatile content of the solution obtained was 50.2%.

### <Examples 1 to 29 and Comparative Examples 1 to 6 (production of coating composition)>

The components shown in Table 5 to Table 7 were formulated by the ratio (mass%) shown in Table 5 to Table 7, and were mixed and dispersed with glass beads having a diameter of 1.5 to 2.5 mm, thereby producing the coating composition.

**[Table 5]**

| Table 5 | | | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| polymer | polymer solution A-1 | | 25 | | | | | | | | | | | | |
| | polymer solution A-2 | | | 25 | | | | | | | | | | | |
| | polymer solution A-3 | | | | 25 | | | | | | | | | | |
| | polymer solution A-4 | | | | | 25 | | | | | | | | | |
| | polymer solution A-5 | | | | | | 25 | | | | | | | | |
| | polymer solution A-6 | | | | | | | 25 | | | | | | | |
| | polymer solution A-7 | | | | | | | | 25 | | | | | | |
| | polymer solution A-8 | | | | | | | | | 25 | | | | | |
| | polymer solution A-9 | | | | | | | | | | 25 | | | | |
| | polymer solution A-10 | | | | | | | | | | | 25 | | | |
| | polymer solution A-11 | | | | | | | | | | | | 25 | | |
| | polymer solution A-12 | | | | | | | | | | | | | 25 | |
| | polymer solution A-13 | | | | | | | | | | | | | | 25 |
| release modifier | gum rosin zinc salt solution | | 6 | 6 | 6 | 6 | 6 | 6 | 6 | 6 | 6 | 6 | 6 | 6 | 6 |
| antifouling agent | cuprous oxide | | 45 | 45 | 45 | 45 | 45 | 45 | 45 | 45 | 45 | 45 | 45 | 45 | 45 |
| | copper pyrithione | | 3 | 3 | 3 | 3 | 3 | 3 | 3 | 3 | 3 | 3 | 3 | 3 | 3 |
| pigment | red oxide | | 2 | 2 | 2 | 2 | 2 | 2 | 2 | 2 | 2 | 2 | 2 | 2 | 2 |
| | talc | | 2 | 2 | 2 | 2 | 2 | 2 | 2 | 2 | 2 | 2 | 2 | 2 | 2 |
| | zinc oxide | | 4 | 4 | 4 | 4 | 4 | 4 | 4 | 4 | 4 | 4 | 4 | 4 | 4 |
| | titanium oxide | | 1 | 1 | 1 | 1 | 1 | 1 | 1 | 1 | 1 | 1 | 1 | 1 | 1 |
| other additive | DISPARLON A603-20X | | 3 | 3 | 3 | 3 | 3 | 3 | 3 | 3 | 3 | 3 | 3 | 3 | 3 |
| | tetraethoxy silane | | 0.5 | 0.5 | 0.5 | 0.5 | 0.5 | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 | 2 | 2 | 2 | 2 | 2 |
| solvent | xylene | | 3.5 | 5.5 | 3.5 | 5.5 | 3.5 | 5.5 | 3.5 | 5.5 | 6.5 | 6.5 | 3.5 | 5.5 | 3.5 |
| | 1-butanol | | | 1 | | 1 | | 1 | | 1 | | | | 1 | |
| | propylene glycol monomethyl ether | | 3 | | 3 | | 3 | | 3 | | | | 3 | | 3 |
| total | | | 100 | 100 | 100 | 100 | 100 | 100 | 100 | 100 | 100 | 100 | 100 | 100 | 100 |
| test example 1 rotary test | average dissolution amount of coating film (*µ*m/month) | initial - after 6 months | 10.0 | 7.5 | 7.9 | 5.6 | 6.4 | 5.1 | 4.2 | 2.5 | 5.8 | 5.0 | 5.0 | 3.3 | 6.7 |
| | | after 6-12 months | 10.0 | 4.2 | 6.1 | 5.2 | 4.4 | 4.2 | 3.3 | 2.5 | 4.2 | 4.2 | 1.7 | 1.7 | 3.3 |
| | | after 12-18 months | 6.7 | 8.3 | 7.0 | 5.8 | 7.5 | 5.8 | 4.2 | 3.3 | 7.5 | 7.5 | 1.1 | 1.7 | 5.8 |
| | | after 18 to 24 months | 6.7 | 6.7 | 6.5 | 5.1 | 5.0 | 5.1 | 5.0 | 4.2 | 5.8 | 5.0 | 2.3 | 1.6 | 7.5 |
| | condition of coating film after 24 months | | A | A | A | A | A | A | A | A | A | A | A | A | A |
| test example 2 antifouling test | after 12 months | | A | A | A | A | A | A | A | A | A | A | B | B | A |
| | after 24 months | | B | B | B | B | B | B | B | B | B | B | C | C | B |

**[Table 6]**

| Table 6 | | | Example | | | | | | | | |
|---|---|---|---|---|---|---|---|---|---|---|---|
| | | | 14 | 15 | 16 | 17 | 18 | 19 | 20 | 21 | 22 |
| polymer | polymer solution A-14 | | 25 | | | | | | | | |
| | polymer solution A-15 | | | 25 | | | | | | | |
| | polymer solution A-16 | | | | 25 | | | | | | |
| | polymer solution A-17 | | | | | 25 | | | | | |
| | polymer solution A-18 | | | | | | 25 | | | | |
| | polymer solution A-19 | | | | | | | 25 | | | |
| | polymer solution A-20 | | | | | | | | 25 | | |
| | polymer solution A-21 | | | | | | | | | 25 | |
| | polymer solution A-22 | | | | | | | | | | 25 |
| release modifier | gum rosin zinc salt solution | | 6 | 6 | 6 | 6 | 6 | 6 | 6 | 6 | 6 |
| antifouling agent | cuprous oxide | | 45 | 45 | 45 | 45 | 45 | 45 | 45 | 45 | 45 |
| | copper pyrithione | | 3 | 3 | 3 | 3 | 3 | 3 | 3 | 3 | 3 |
| pigment | red oxide | | 2 | 2 | 2 | 2 | 2 | 2 | 2 | 2 | 2 |
| | talc | | 2 | 2 | 2 | 2 | 2 | 2 | 2 | 2 | 2 |
| | zinc oxide | | 4 | 4 | 4 | 4 | 4 | 4 | 4 | 4 | 4 |
| | titanium oxide | | 1 | 1 | 1 | 1 | 1 | 1 | 1 | 1 | 1 |
| other additive | DISPARLON A603-20X | | 3 | 3 | 3 | 3 | 3 | 3 | 3 | 3 | 3 |
| | tetraethoxy silane | | 0.5 | 0.5 | 0.5 | 0.5 | 0.5 | 0.5 | 0.5 | 0.5 | 0.5 |
| | tricresyl phosphate | | 2 | 2 | 2 | 2 | 2 | 2 | 2 | 2 | 2 |
| solvent | xylene | | 3.5 | 3.5 | 5.5 | 5.5 | 5.5 | 3.5 | 3.5 | 3.5 | 5.5 |
| | 1-butanol | | | | 1 | 1 | 1 | | | | 1 |
| | propylene glycol monomethyl ether | | 3 | 3 | | | | 3 | 3 | 3 | |
| total | | | 100 | 100 | 100 | 100 | 100 | 100 | 100 | 100 | 100 |
| test example 1 rotary test | average dissolution amount of coating film (*µ*m/month) | initial - after 6 months | 7.5 | 7.2 | 4.2 | 5.0 | 5.5 | 4.2 | 5.0 | 5.0 | 8.3 |
| | | after 6-12 months | 5.8 | 5.3 | 4.1 | 4.8 | 5.3 | 3.3 | 3.3 | 5.0 | 8.4 |
| | | after 12-18 months | 6.7 | 5.8 | 5.0 | 4.9 | 5.0 | 4.2 | 4.2 | 10.0 | 8.6 |
| | | after 18 to 24 months | 6.8 | 5.0 | 5.1 | 4.2 | 4.2 | 4.2 | 4.3 | 13.3 | 10.0 |
| | condition of coating film after 24 months | | A | A | A | A | A | A | A | A | A |
| test example 2 antifouling test | after 12 months | | A | A | A | A | A | A | A | A | A |
| | after 24 months | | B | B | B | B | B | B | B | B | B |

**[Table 7]**

| Table 7 | | | Example | | | | | | | Comparative Example | | | | | |
|---|---|---|---|---|---|---|---|---|---|---|---|---|---|---|---|
| | | | 23 | 24 | 25 | 26 | 27 | 28 | 29 | 1 | 2 | 3 | 4 | 5 | 6 |
| polymer | polymer solution A-23 | | 25 | | | | | | | | | | | | |
| | polymer solution A-24 | | | 25 | | | 31 | 25 | | | | | | | |
| | polymer solution A-25 | | | | 25 | | | | 25 | | | | | | |
| | polymer solution A-26 | | | | | 25 | | | | | | | | | |
| | polymer solution B-1 | | | | | | | | | 25 | | | | | |
| | polymer solution B-2 | | | | | | | | | | 25 | | | | |
| | polymer solution B-3 | | | | | | | | | | | 25 | | | |
| | polymer solution B-4 | | | | | | | | | | | | 25 | | |
| | polymer solution B-5 | | | | | | | | | | | | | 25 | |
| | polymer solution B-6 | | | | | | | | | | | | | | 25 |
| release modifier | gum rosin zinc salt solution | | 6 | 6 | 6 | 3 | | 6 | 6 | 6 | 6 | 6 | 6 | 6 | 6 |
| | gum rosin solution | | | | | 3 | | | | | | | | | |
| antifouling agent | cuprous oxide | | 45 | 45 | 45 | 45 | 45 | | | 45 | 45 | 45 | 45 | 45 | 45 |
| | copper pyrithione | | 3 | 3 | 3 | 3 | 3 | | | 3 | 3 | 3 | 3 | 3 | 3 |
| | zinc pyrithione | | | | | | | 5 | 5 | | | | | | |
| | ECONEA 028 | | | | | | | 7 | 6 | | | | | | |
| | Medetomidine | | | | | | | | 1 | | | | | | |
| pigment | red oxide | | 2 | 2 | 2 | 2 | 2 | 10 | 10 | 2 | 2 | 2 | 2 | 2 | 2 |
| | talc | | 2 | 2 | 2 | 2 | 2 | 8 | 8 | 2 | 2 | 2 | 2 | 2 | 2 |
| | zinc oxide | | 4 | 4 | 4 | 4 | 4 | 30 | 30 | 4 | 4 | 4 | 4 | 4 | 4 |
| | titanium oxide | | 1 | 1 | 1 | 1 | 1 | 1 | 1 | 1 | 1 | 1 | 1 | 1 | 1 |
| other additive | DISPARLON A603-20X | | 3 | 3 | 3 | 3 | 3 | 2 | 2 | 3 | 3 | 3 | 3 | 3 | 3 |
| | tetraethoxy silane | | 0.5 | 0.5 | 0.5 | 0.5 | 0.5 | 0.5 | 0.5 | 0.5 | 0.5 | 0.5 | 0.5 | 0.5 | 0.5 |
| | tricresyl phosphate | | 2 | 2 | 2 | 2 | 2 | 1 | 1 | 2 | 2 | 2 | 2 | 2 | 2 |
| solvent | xylene | | 3.5 | 5.5 | 3.5 | 5.5 | 5.5 | 4 | 2.5 | 3.5 | 5.5 | 3.5 | 5.5 | 3.5 | 3.5 |
| | 1-butanol | | | 1 | | 1 | 1 | 0.5 | | | 1 | | 1 | | |
| | propylene glycol monomethyl ether | | 3 | | 3 | | | | 2 | 3 | | 3 | | 3 | 3 |
| total | | | 100 | 100 | 100 | 100 | 100 | 100 | 100 | 100 | 100 | 100 | 100 | 100 | 100 |
| test example 1 rotary test | average dissolution amount of coating film (*µ*m/month) | initial - after 6 months | 5.0 | 3.3 | 4.2 | 3.3 | 2.5 | 6.7 | 5.0 | 5.0 | 4.2 | 3.8 | 3.3 | 1.6 | 18.3 |
| | | after 6-12 months | 6.7 | 5.0 | 5.0 | 3.4 | 3.0 | 6.8 | 5.1 | 1.3 | 0.8 | 1.5 | 0.8 | 0.1 | 1.7 |
| | | after 12-18 months | 8.3 | 8.3 | 8.3 | 5.0 | 4.5 | 8.3 | 6.7 | 0.3 | 0.7 | 0.2 | 0.5 | 1.0 | 1.5 |
| | | after 18 to 24 months | 10.0 | 8.5 | 9.2 | 5.1 | 5.5 | 11.7 | 8.3 | 0.8 | 0.5 | 0.3 | 0.3 | 0.4 | 0.8 |
| | condition of coating film after 24 months | | A | A | A | A | A | A | A | A | A | A | A | A | B |
| test example 2 antifouling test | after 12 months | | A | A | A | A | A | A | A | C | C | C | C | C | C |
| | after 24 months | | B | B | B | B | B | B | B | C | C | C | D | D | D |

Details of the components in the Tables are as follows.

### <antifouling agent>

cuprous oxide: product name "NC-301" (available from NISSIN CHEMCO)
copper pyrithione : product name "copper Omadine" (available from Lonza Group AG)
zinc pyrithione: product name "zinc Omadine" (available from Lonza Group AG)
Econia: product name "Econea 028" (2-(p-chlorophenyl)-3-cyano-4-bromo-5-trifluoromethyl pyrrole, available from JANSSEN PMP)
medetomidine: (±)-4-[1-(2,3-dimethylphenyl)ethyl]-1H-imidazole (available from Wako Pure Chemical Industries, Ltd.)

### <other additives>

tricresyl phosphate: (available from DAIHACHI CHEMICAL INDUSTRY CO., LTD.)
rosin zinc salt solution: The one produced in production example 58 was used.
gum rosin solution : xylene solution (50% solids) of Chinese gum rosin (WW)
red oxide: product name "BENGARAKINGYOKU" (available from MORISHITA BENGARA KOGYO CO., LTD)
talc: product name "talc MS" (available from Nippon Talc Co., Ltd.)
zinc oxide: product name "zinc oxide II" (available from Seido Chemical Industry Co., Ltd.)
titanium oxide: product name "FR-41" (available from FURUKAWA CO., LTD.)
tetraethoxy silane: product name "Ethyl Silicate 28" (available from COLCOAT CO., LTD.)
DISPARLON A603-20X: amide based thixotropic agent: product name "DISPARLON A603-20X" (available from Kusumoto Chemicals, Ltd.)

The following tests were performed with the coating compositions of Examples and Comparative Examples. Evaluation results are shown in Table 5 to Table 7.

In all of the Comparative Examples, when compared with the Examples, results of at least either one of rotary test or antifouling test was not satisfactory. Results obtained for each of Comparative Examples 1 to 5 corresponds to the result obtained when n of monomer (a) was adjusted to 1 in Examples 1 to 4 and 11. When Comparative Examples 1 to 5 are compared with Examples 1 to 4 and 11 respectively, it can be understood that antifouling property can be improved by adjusting n of monomer (a) to 2 to 10. In addition, when compared with Examples 11 to 12 in which R2 of monomer (a) is Me, other Examples in which R2 of monomer (a) is H showed particularly superior antifouling property.

### <test example 1 (rotary test)>

A tank was provided, in the center thereof, with a rotating drum having a diameter of 515 mm and a height of 440 mm to allow the rotation of the drum by a motor. The tank was also provided with a cooling apparatus for keeping the temperature of seawater constant, and an automatic pH controller for keeping the pH of the seawater constant.

Test plates were prepared in accordance with the following method.

First, an anti-corrosive coating film was formed by applying an anti-corrosive coating material (an epoxy vinyl-based A/C) onto a titanium plate (71 × 100 × 0.5 mm) such that the thickness after drying would be about 100 µm, followed by drying. Then, coating compositions obtained in Examples and Comparative Examples were applied so that the thickness after drying would be about 300 µm. The applied coating was dried for 3 days at 40°C, thereby preparing the test plates.

The thus-prepared test plates were secured to the rotating drum of the rotary apparatus of the above-mentioned equipment and was made to contact the seawater, and the rotating drum was rotated at a speed of 20 knots. During the test, the seawater temperature was maintained at 25°C and the pH at 8.0 to 8.2; and the seawater was replaced once every two weeks.

Initial film thickness and remaining film thickness were measured every 6 months for each of the testing plates, using a shape measurement laser microscope VK-X100 (available from KEYENCE CORPORATION). The dissolved coating film thickness was calculated from the difference between the two values, thereby obtaining dissolution amount of the coating film for one month (µm/month). Further, when measuring the remaining film thickness after 24 months in the rotary test, the surface of each coating films was observed with naked eye and with a microscope to evaluate the surface condition of the coating film.

Evaluation of the conditions of the surface of the coating films were performed under the following criteria.
A: No defect observed
B: Hairline cracks observed in less than 10% of the entire area of the surface of the coating film
C: Hairline cracks observed in 10 to 30% of the entire area of the surface of the coating film
D: Hairline cracks observed in 30% or more of the entire area of the surface of the coating film
E: Coating film defects such as large cracks, blisters or peel-offs (only the surface or a part of the corner of the coating film peel off), delamination (the coating film peels off entirely, and no test coating film remains) are observed

### <test example 2 (antifouling test)>

Each of the coating compositions obtained in Examples 1 to 29 and Comparative Examples 1 to 6 was applied onto both surfaces of a hard vinyl chloride plate (100 x 200 x 2 mm) such that the thickness of a dry coating film would be about 300 um. The applied coating was dried for 3 days at room temperature (25°C), and the test plate having the dry coating film with a thickness of about 300 µm was prepared. This test plate was immersed at 1.5 m below sea level in Owase City, Mie Prefecture, Japan, and the test plate fouling due to attached objects was examined after 12 months and 24 months.

The state of the surface of the coating film was visually evaluated in accordance with criteria shown below.
A: Fouling organisms such as shellfish or algae do not attach, and slime hardly attaches.
B: Fouling organisms such as shellfish or algae do not attach, and slime thinly attaches (to the extent that the coating film surface is observable) and the slime can be removed when wiped softly with a brush.
C: Fouling organisms such as shellfish or algae do not attach, but slime thickly attaches (to the extent that the coating film surface is not observable) and the slime cannot be removed even when wiped strongly with a brush.
D: Fouling organisms such as shellfish or algae do attach.

## Claims

1. An antifouling coating composition comprising polymer A and antifouling agent; wherein
the polymer A is a copolymer of monomer (a) and ethylenically unsaturated monomer (b) other than the monomer (a); and
the monomer (a) is represented by general formula (1): 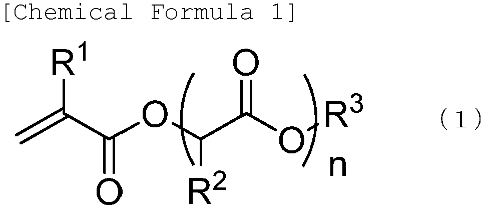 wherein, represents hydrogen atom or methyl group; R² represents hydrogen, methyl group, or phenyl group; R³ represents methyl group, ethyl group, n-propyl group, isopropyl group, n-butyl group, t-butyl group, 2-ethylhexyl group, cyclohexyl group, benzyl group, phenyl group, 2-methoxyethyl group, 4-methoxybutyl group, vinyl group, or allyl group; and n represents an integer of 2 to 10.

## Patentansprüche

1. Bewuchshemmende Beschichtungszusammensetzung, die ein Polymer A und ein bewuchshemmendes Mittel umfasst; wobei
das Polymer A ein Copolymer eines Monomers (a) und eines ethylenisch ungesättigten Monomers (b), das von dem Monomer (a) verschieden ist, ist; und
das Monomer (a) durch die allgemeine Formel (1) dargestellt wird: 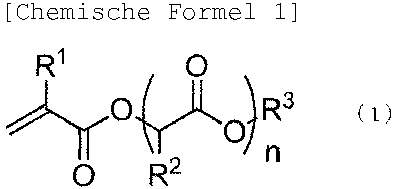 wobei R¹ ein Wasserstoffatom oder eine Methylgruppe darstellt; R² Wasserstoff, eine Methylgruppe oder Phenylgruppe darstellt; R³ eine Methylgruppe, Ethylgruppe, n-Propylgruppe, Isopropylgruppe, n-Butylgruppe, t-Butylgruppe, 2-Ethylhexylgruppe, Cyclohexylgruppe, Benzylgruppe, Phenylgruppe, 2-Methoxyethylgruppe, 4-Methoxybutylgruppe, Vinylgruppe oder Allylgruppe darstellt; und n eine ganze Zahl von 2 bis 10 darstellt.

## Revendications

1. Composition de revêtement antisalissure comprenant un polymère A et un agent antisalissure ; dans laquelle
le polymère A est un copolymère d'un monomère (a) et d'un monomère éthyléniquement insaturé (b) autre que le monomère (a) ; et
le monomère (a) est représenté par la formule générale (1) : 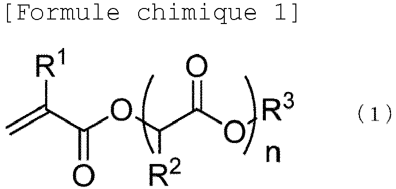 dans laquelle, R¹ représente un atome d'hydrogène ou un groupe méthyle ; R² représente un atome d'hydrogène, un groupe méthyle ou un groupe phényle ; R³ représente un groupe méthyle, un groupe éthyle, un groupe n-propyle, un groupe isopropyle, un groupe n-butyle, un groupe t-butyle, un groupe 2-éthylhexyle, un groupe cyclohexyle, un groupe benzyle, un groupe phényle, un groupe 2-méthoxyéthyle, un groupe 4-méthoxybutyle, un groupe vinyle ou un groupe allyle ; et n représente un entier de 2 à 10.
